# EUROPEAN PATENT APPLICATION

(11) **EP 4 682 085 A1**
(43) Date of publication of application: **21.01.2026**
(21) Application number: 24189920.2
(22) Date of filing: 19.07.2024
(51) Int. Cl.: B65G 1/04, B66C 1/10

(54) **A ROBOTIC VEHICLE**

(71) Applicant: AutoStore Technology AS, 5578 Nedre Vats (NO)
(72) Inventor: Austrheim, Trond, 5578 Nedre Vats (NO); Aarseth, Simen, 5578 Nedre Vats (NO); Fagerland, Ingvar, 5578 Nedre Vats (NO)
(74) Representative: Kilburn & Strode LLP

(57) **Abstract**

The disclosure relates to a robotic vehicle (500) for lifting storage bins (508) from a storage system, the robotic vehicle comprising: a vehicle body (502) comprising an internal cavity (510) for receiving a plurality of storage bins; a gripping device configured to releasably engage a plurality of stacked storage bins; and a lifting device configured to raise and lower the gripping device.

## Description

### TECHNICAL FIELD

The disclosure relates to a robotic vehicle. More particularly, it relates to a robotic vehicle for lifting storage bins from a storage system, and a method of lifting bins from an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The automated storage and retrieval systems can be large and include a large number of containers or bins. This means that a large number of containers must be lifted in order to access a container in the lower section of a stack of containers. The total number of containers to be moved to access a container containing goods may be large. In addition, it is desirable to move a large number of containers within the system in a relatively short amount of time. It is desirable to provide a robust and reliable mechanism for lifting a container or containers from above.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a multi-lift robot on a grid of a storage system carrying four containers;
Fig. 5B shows the multi-lift robot of Fig. 5A without any storage containers;
Fig. 5C shows the multi-lift robot of Fig 5A and Fig. 5B lifting four containers;
Fig. 6 shows a lifting device and gripping device for a multi-lift robot;
Fig. 7A shows a multi-lift robot in position above a stack of bins and with a gripping device and guide in default resting positions;
Fig. 7B shows a multi-lift robot in position above a stack of bins and with the gripping device in a default resting position and with a guide positioned and engaged by the stack of bins;
Fig. 7C shows a multi-lift robot in position above a stack of bins and with the guide and gripping device engaged by the stack of bins;
Fig. 7D shows a multi-lift robot in position above a stack of bins and with the guide and gripping device engaged by the stack of bins, and the gripping arms in a closed position;

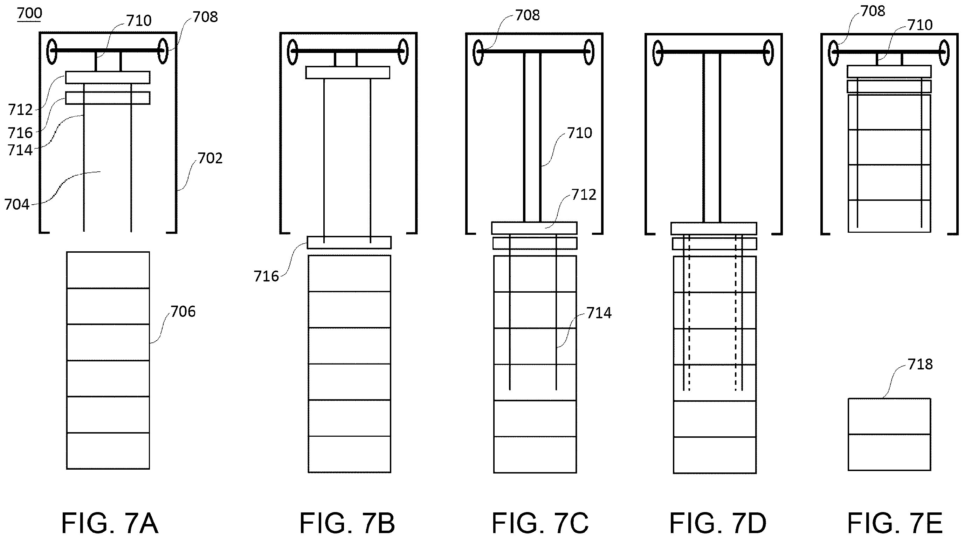

Fig. 7D shows a multi-lift robot with a stack of bins lifted into an internal cavity;

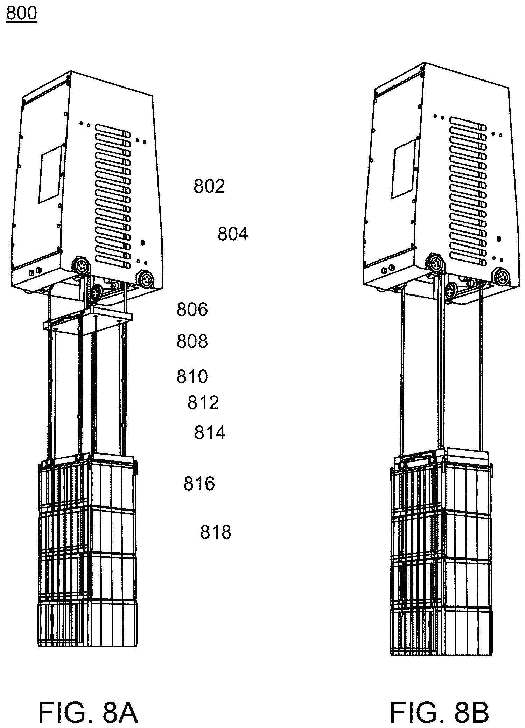

Fig. 8A shows a multi-lift robot engaged with a top container of a stack of containers with a gripping device partially extended;
Fig. 8B shows the multi-lift robot of Fig. 8A with the gripping device fully extended;

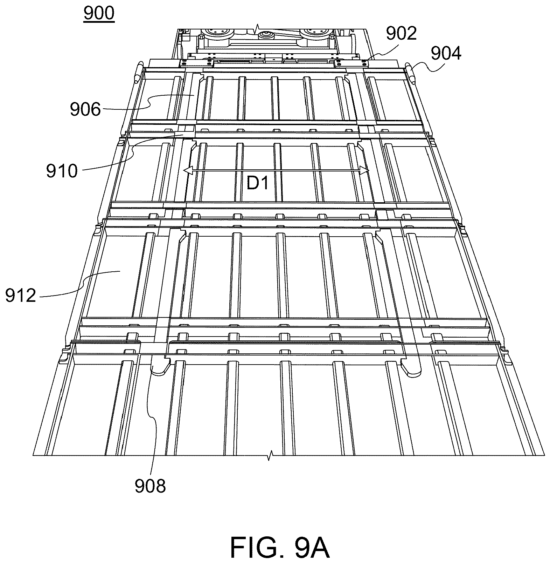

Fig. 9A shows gripper arms of a lifting device in four containers and in an open position; and

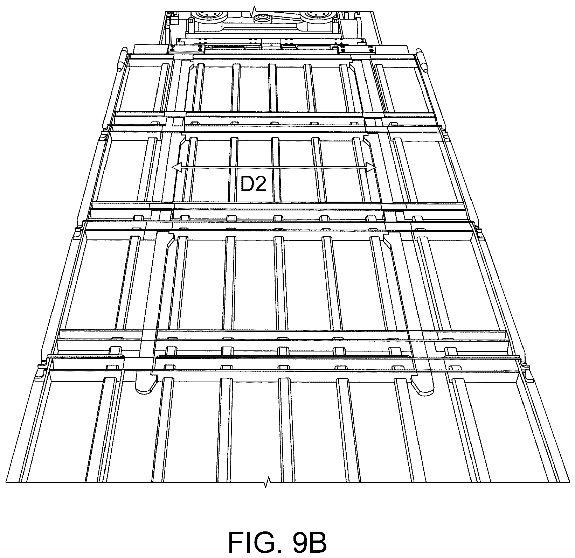

Fig. 9B shows the gripper arms of Fig. 9A in a closed position;

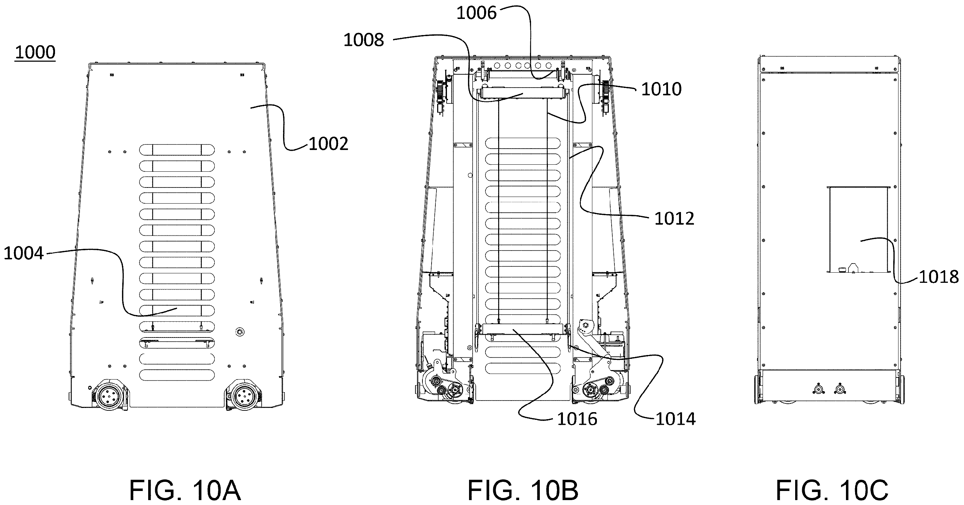

Fig. 10A shows a side view of a multi-lift robot with a gripping device partially extended;
Fig. 10B shows a vertical cross-sectional view of the multi-lift robot of Fig. 10A;
Fig. 10C shows a front view of the multi-lift robot of Fig. 10A;

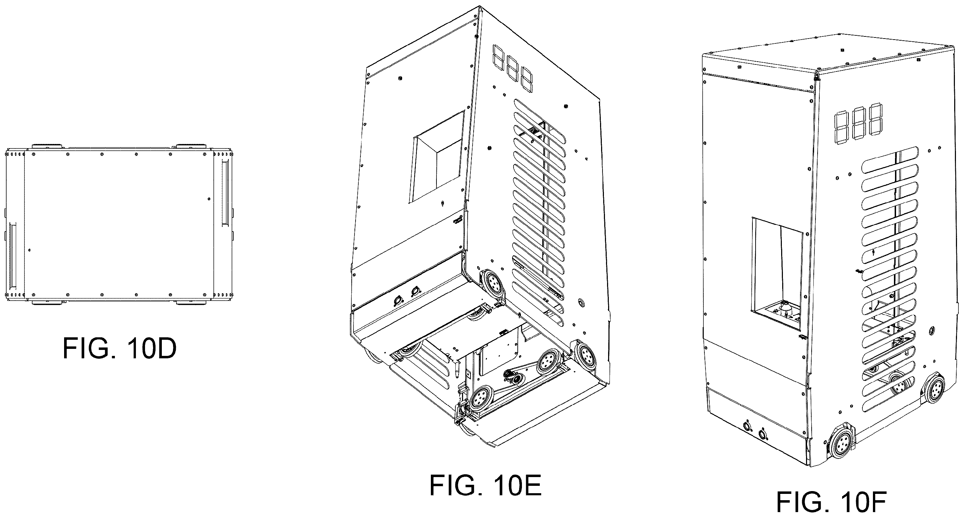

Fig. 10D shows a top view of the multi-lift robot of Fig. 10A;
Fig. 10E shows a bottom perspective view of the multi-lift robot of Fig. 10A;
Fig. 10F shows a top perspective view of the multi-lift robot of Fig. 10A;

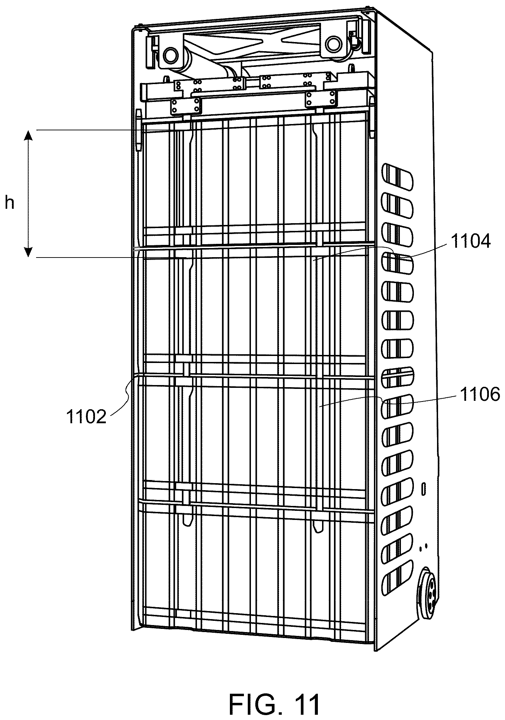

Fig. 11 shows a multi-lift robot with a gripping device supporting a stack of bins in an internal cavity of the robot; and

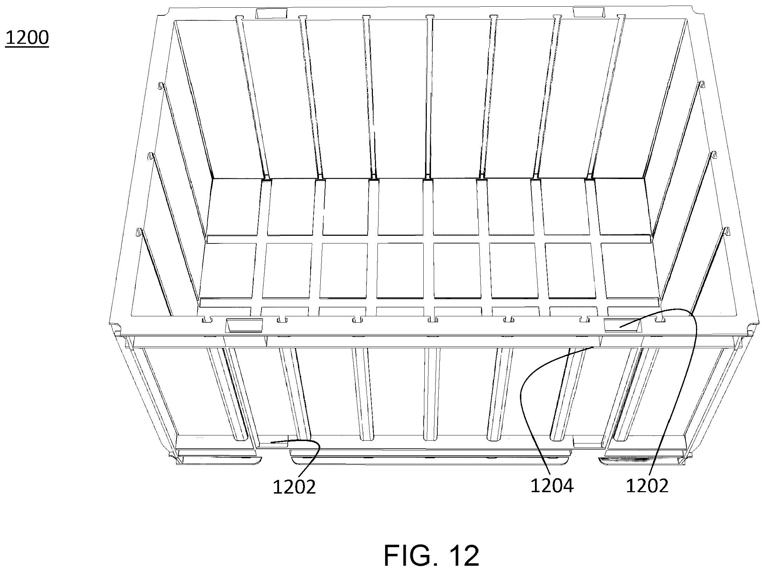

Fig. 12 shows a single, stackable, bin.

### DETAILED DESCRIPTION

In overview, the disclosure relates to a robot for lifting up a number of stacked bins from beneath the robot into an internal cavity within the robot, for transport or other manipulation by the robot. The robot may be referred to as a robotic vehicle, or a multi-lift robot, and is movable on a system of rails beneath the robotic vehicle, through which rails the bins are lifted. As a consequence of being configured to lift a stack of bins, the robotic vehicle is tall enough to house the stack. A gripping mechanism travels from a top of the internal cavity, down through the internal cavity, and down through the rails to reach the stack of bins below. A lifting device at a top of the internal cavity provides a mechanism to raise and lower the gripping device to reach the stack of bins below. The gripping device engages with the stack of bins and, by the action of the lifting device, raises and lowers bins into and out of the internal cavity.

The robotic vehicle is described in more detail below. The optional inclusion of a guide provides an intermediate body positioned between the gripping mechanism and the stack of bins to facilitate co-location of the gripping device and the bins for engagement of the bins by the gripping device. Owing to the stack height of the bins, the gripping device must travel a long vertical distance from the top of the robotic vehicle to engage the stack of bins below. Downwardly projecting arms of the gripping device thread apertures in the guide. Downwardly projecting pins of the guide thread apertures in the top bin of the stack of bins. The guide receives the downwardly projecting arms of the gripping device, and via its own projecting pins is itself received by the top bin, and so acts as an intermediate element to ensure correct placement of the gripping device relative to the stack of bins. The downwardly projecting arms of the gripping device can thereby be moved vertically downward to thread corresponding slots or apertures in the bins.

The robotic vehicle provides a means to lift and transport a stack of bins.

The guide provides a precise alignment between gripping device and the stack of bins to allow the long gripper arms to thread slots in the sides of the bins.

### Automated storage and retrieval system overview

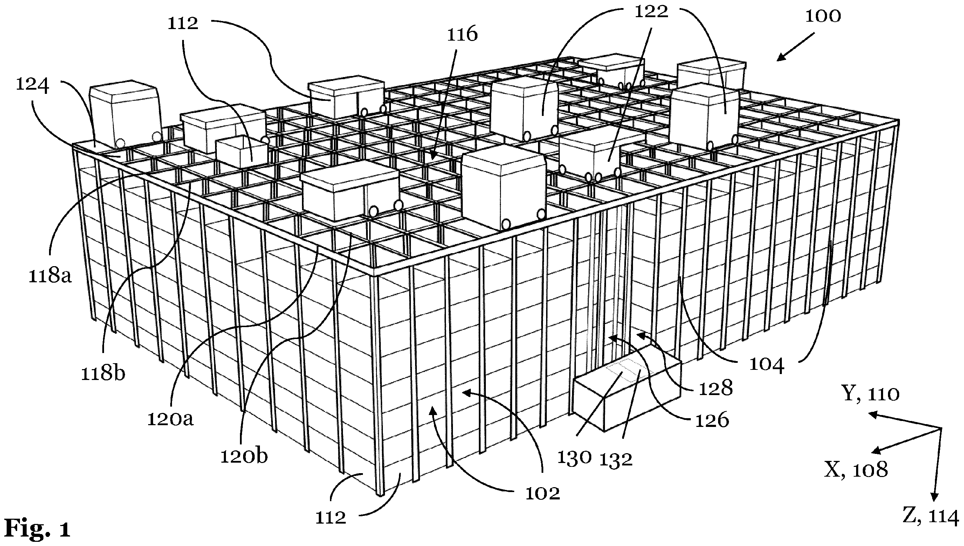

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering (`pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

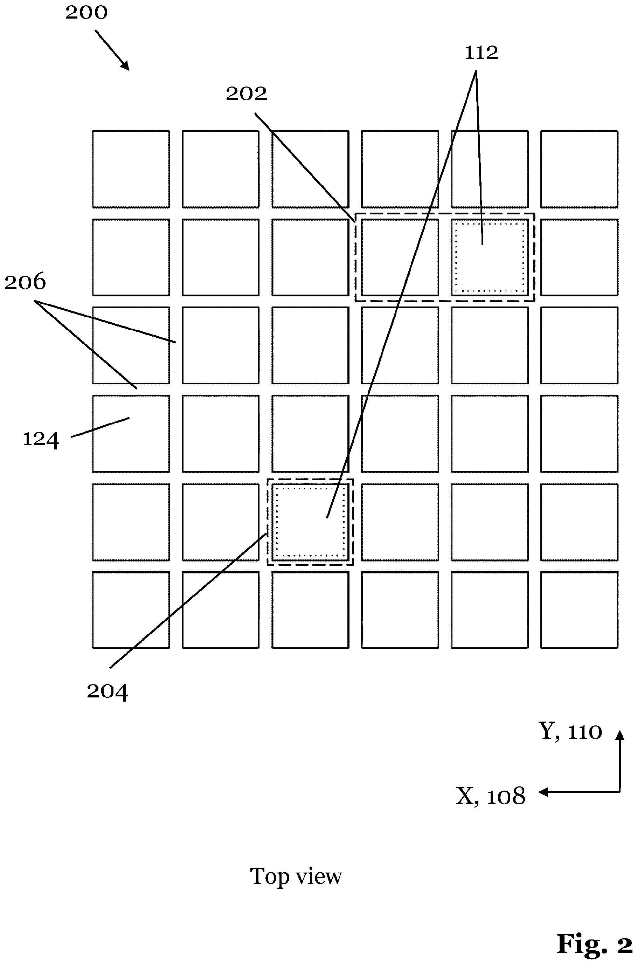

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

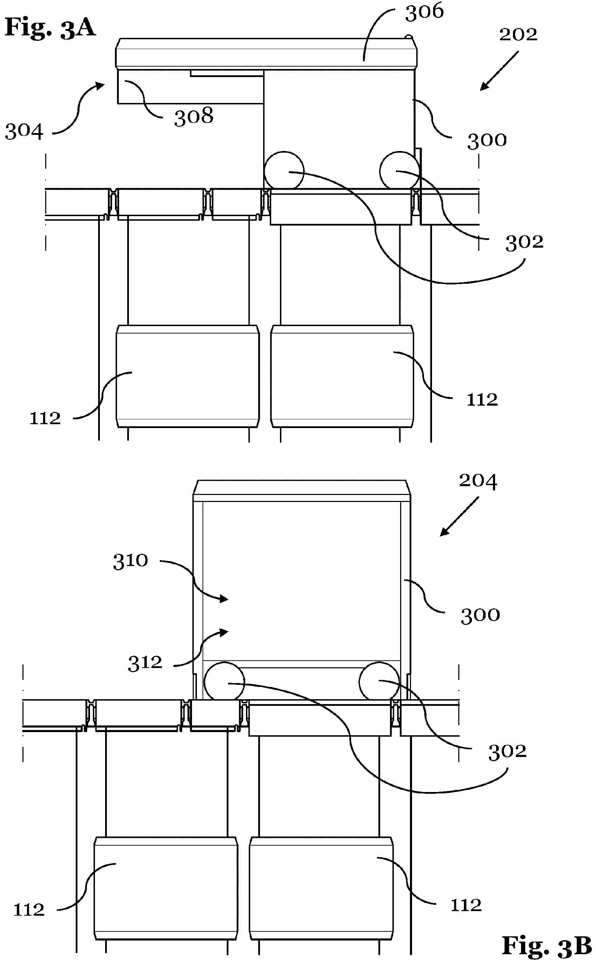

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

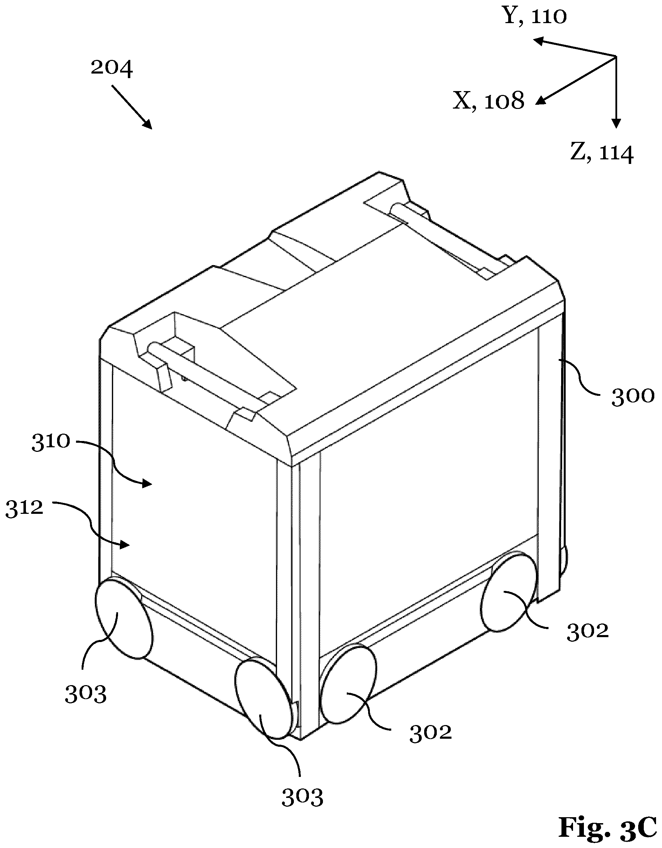

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

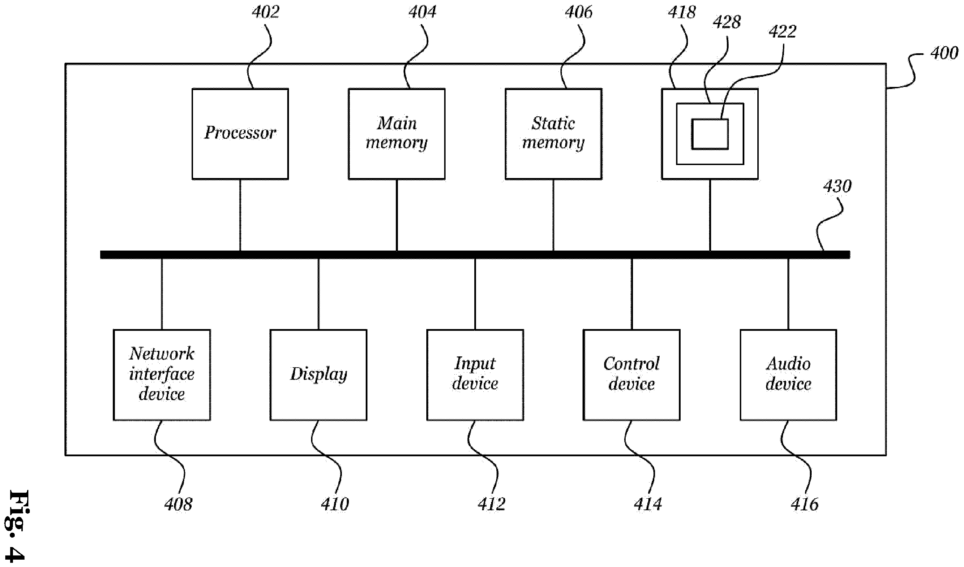

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device maybe a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements: overview and context

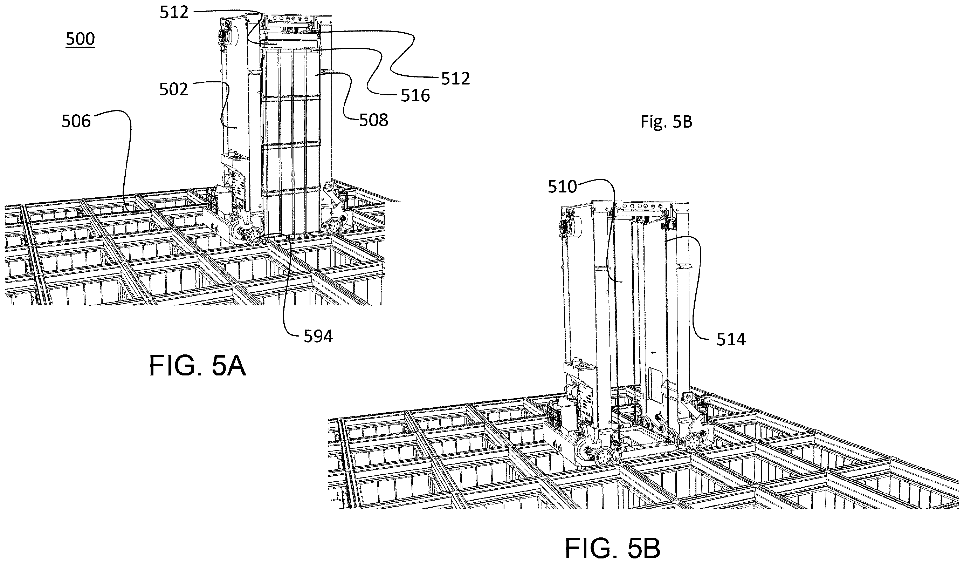

With reference to Figs. 5A and 5B, a robotic vehicle, or robot, 500 has a body 502 and wheels 504. The robot 500 is positioned on a rail system 506 of a storage system, and the wheels 504 are configured to move the robot 500 in two directions on the rail system 506. The robot 500 has an internal cavity, which, in Fig. 5A, houses four bins 508. The robotic vehicle 500 may comprise a first and second set of wheels for moving the vehicle in a first and second direction respectively.

Figs. 5A to 5C (at least partially) illustrate an automated storage and retrieval system comprising: a plurality of vertical storage columns, each vertical storage column configured to accommodate a plurality of storage bins in a vertical stack, a plurality of storage bins for stacking in the vertical columns, a horizontal rail system arranged above the vertical storage columns, configured to support a vehicle to travel on the rail system, and a robotic vehicle configured to insert and remove storage bins from the vertical storage columns. Examples of robotic vehicles for the purpose are illustrated in the Figures and described in more detail below.

Fig. 5B shows the internal cavity 510 of the robotic vehicle 500. In Fig. 5B the internal cavity 510 is empty and the robot 500 is not carrying any bins. The internal cavity 510 is sized and configured to house a plurality of bins. In Fig. 5A and 5B the internal cavity 510 is configured to house a maximum of four bins. By being configured to house four bins, the internal cavity 510 is by implication also sized and configured to house a number of bins that is less than four, four being the maximum capacity of the robotic vehicle 500 shown in Figs. 5A and 5B. The maximum number of bins that the internal cavity 510 is sized and configured to house may be 2, 3, 4, 5, 6, 7, 8, or greater than 8. The internal cavity 510 is at least partially defined by the body 502. The body 502 may comprise partial or complete walls at each side of the body, the walls being arranged, directly or via intermediate structural elements, to constrain (or preclude altogether) movement of the stack of bins relative to the body once the stack of bins is received into the internal cavity 510.

In comparison to a robot which is configured to receive a single bin in the internal cavity, the robot in Fig. 5A to 5C has an internal cavity 510 which is four times taller than a single-bin robot. The footprint of the cavity is the same as for a single bin robot. The robot is configured to receive a plurality of storage bins. The robot 500 may be configured to receive a plurality of storage bins arranged in a single vertical column. By being configured to receive a plurality of storage bins arranged in a single vertical column, the footprint of the cavity is enabled to be the same as for a single bin robot. Correspondingly, a gripping device is configured to releasably engage a plurality of stacked storage bins, wherein the stacked storage bins are stacked in a single vertical column.

The internal cavity 510 may be configured to receive the plurality of storage bins via an aperture at a base of the internal cavity, and a lifting device may be configured to move a gripping device vertically downward relative to the internal cavity to releasably engage a plurality of stacked storage bins by moving gripping arms from an open position to a closed position. The lifting device may be further configured to move the gripping device and the releasably engaged plurality of stacked storage bins vertically upward into the internal cavity via the aperture at the base of the internal cavity.

The robotic vehicle may further comprise a guide. Such a guide is suspended beneath the gripping platform and vertically movable relative to the gripping platform, the guide comprising one or more alignment pins positioned to correspond to pin holes in a flange of a top storage bin among the plurality of storage bins, the guide further comprising a plurality of alignment slots, each being configured to receive one of the gripping arms, to permit vertical sliding of the guide along the gripping arm, and to confine horizontal plane movement of the gripping arms relative to the guide to a range defined by the open position and the closed position of the gripping arms. The guide thereby establishes a fixed positional relationship between the gripping arms and the stack of bins, in the horizontal plane; the gripping arms are vertically movable relative to the stack of bins when in the open position.

A lifting device configured to lift a plurality of bins 508 is visible in Fig. 5B. The lifting device is configured to lift a stack comprising a plurality of bins 508 from a vertical storage column in the storage system. The stack is a single vertical column of bins 508, noting that in their stored arrangement (i.e. absent of engagement by the gripping device) the bins may be stacked in direct contact with adjacent bins in the stack (or otherwise vertically coupled to one another) so that vertical forces are transferred between adjacent bins in the stack 508, or there may be a support structure present to isolate adjacent bins in the stack from one another in vertical space, so that vertical forces are not transferred between adjacent bins in the stack.

The robot in Figs. 5A and 5B is configured to lift four bins. The gripping device in Fig 5B is in an extended position, as will be explained later. The gripping device includes a platform 512 and bands 514 forming part of the lifting device are configured to raise and lower the platform. The platform 512 may be referred to as a gripping platform. The bands 514 may be referred to as lifting bands.

The gripping device may also include a guide 516. The guide 516 is configured to align the gripping arms in a position to releasably engage the stack of bins 508. The guide may comprise a plurality of slots, apertures, rings, or tubes, each configured to receive a gripping arm. Therefore, a fixed positional relationship between the gripping arm and the guide in the horizontal plane is established. The guide 516 may comprise a planar horizontal body configured to rest on top of a storage bin. The planar horizontal body may be referred to as a platform. The gripping device may comprise two platforms: the gripping platform 512 and the guide 516. The gripping platform 512 and the guide 516 are vertically movable relative to one another and relative to the robot body 502. The guide may be attached to, and suspended below, the gripping platform by retractable wires. The retractable wires may be retractable by a guide actuator such as a motor and spool attached to the gripping platform 512. The lifting device provides a lifting force to control the downward motion of the gripping device components and payload under gravity, and to oppose gravity to enable upward motion of the gripping device components and payload. Payload in this context is taken to mean the plurality of bins 508.

The bands 514 are configured to transfer a force from an actuating mechanism 518 to the platform 512 by tensioning the bands 514. The actuating mechanism 518 is a component of the lifting device. The tension acts to oppose gravity and, during lifting, to accelerate the stack of bins 508 vertically upward into the internal cavity 510. During lowering, the tension acts to oppose gravity and to reduce downward acceleration of the stack of bins 508 caused by gravitational pull. The actuating mechanism 518 may comprise a motor and a set of spools, around which spools the bands 514 are wound and unwound according to a state of the lifting device and gripping device. The motor is rotationally coupled to the set of spools.

The actuating mechanism 518 may be arranged vertically above the internal cavity 510, or be configured via spools and/or pulleys to exert an upward pulling force on the stack of bins 510 as they are raised into the internal cavity 510. The actuating mechanism 518 is configured to raise the stack of bins 508 into, or to control lowering of the stack of bins 508 out of, the internal cavity 510 by exerting only a pulling force on the bands 514. The actuating mechanism 518 need not be configured to exert a pushing force. References to raising and lowering the stack of bins by implication include raising and lowering the gripping device and, depending on configuration, one or more components of the lifting device.

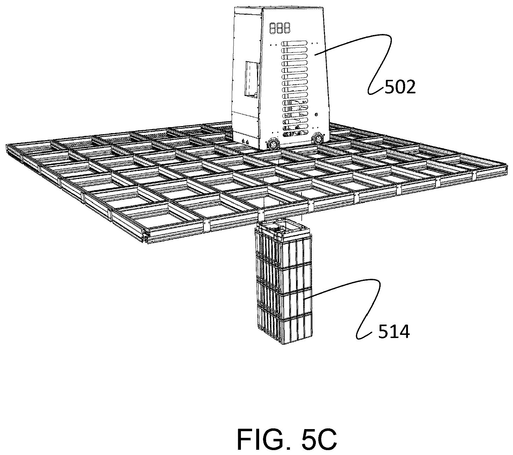

Fig. 5c shows the robotic vehicle 500 in the act of lifting four bins 508 from the vertical column to the interior cavity of the robot. The bins 508 are suspended below the robot, with the weight of the bins being supported by the lifting device. The act of lifting is set out in more detail below with reference to Figs. 7A to 7E.

In use, the robot 500 is routed via the rail system 506 to a vertical column which includes a target bin which is desired to be retrieved. In the event that the target bin is below other bins in the stack then the robot is controlled in a 'digging' operation to lift and reposition, temporarily or permanently, bins above the target bin in order for it to be retrieved. The lifting device is positioned over the corresponding access opening to the vertical column below the robot. The robot 500 lowers the lifting platform 512 using the lifting bands 514. The lifting device engages, grips and lifts four bins from the vertical column to the robot 500. The four bins 508 are received in the internal cavity 510 of the robot. The robot 500 then transports the bins. The robot may transport the bins to another location on the grid. The robot may lower the bins into another vertical storage column. Alternatively, the robot may retain the bins in the internal cavity whilst other robots retrieve the target bin.

### Description of specific improvements: arrangements of lifting device and gripping device

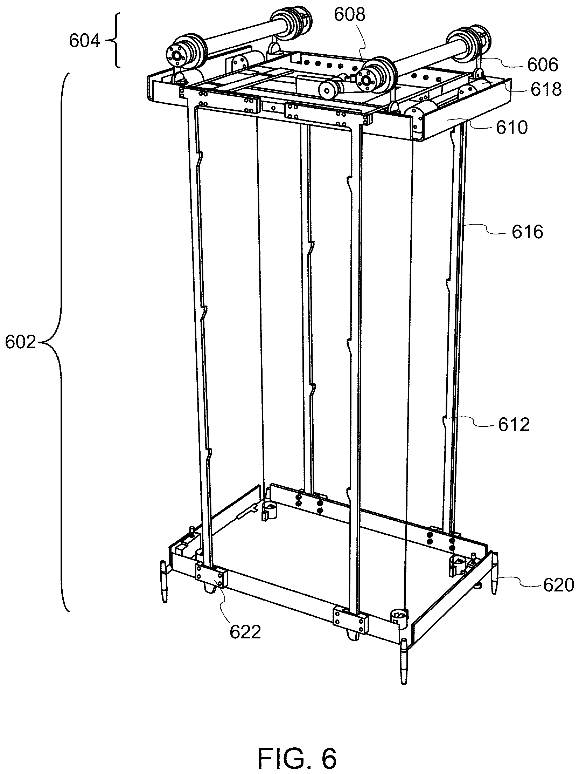

Fig. 6 shows a gripping device 602 and lifting device 604 for a robot such as the robot shown in Figs. 5A to 5c. The lifting device 604 in the example of Fig. 6 comprises actuated spools 608 and lifting bands 606. The spools may be encoded so that a controller is aware of vertical displacement of the gripping device relative to the lifting device. The controller may, prior to gripping storage bins (i.e. moving gripping arms from an open to a closed position) measure a distance travelled by the gripping arms relative to a guide resting or otherwise positioned on top of an uppermost bin in the stack of bins, and determine that a threshold distance has been travelled. Translation of gripping arms from an open to a closed position may be dependent upon the threshold distance being travelled. The threshold distance may be configurable by a controller in dependence upon a number of bins that it is desired to retrieve.

The lifting device 604 may be fixedly attached to the robot body 502. The lifting device 604 by actuation of the spools 608, causes vertical translation of the gripping device 602 relative to the lifting device (and robot body) 604 by winding and unwinding the lifting bands 606 onto the spools 608. The spools may be actuated by a motor or by some other actuating mechanism forming part of the lifting device 604. The gripping device 602 comprises gripping platform 610 and a plurality of gripping arms 612 attached to the gripping platform 610.

The lifting device 604 is a device configured to cause vertical translation of the gripping device 602 and payload (when the gripping device is loaded with bins) relative to the internal cavity 510 of the robot body 502. Fig. 6 illustrates a specific example in which the lifting device 604 comprises spools 608 which are actuated (by an actuator such as a motor) to wind and unwind lifting bands 606 aligned in the horizontal plane with respective corners of the gripping platform 610. Chains, cables, ropes, or some other windable element may be used as an alternative to lifting bands. A motor is an example of an actuating mechanism for providing the vertical force to control vertical translation of the gripping device by the lifting device. Alternative actuating mechanisms could be pneumatic or hydraulic actuators, or solenoids. The axle or axles may be fixedly mounted on the robot body 502. In an alternative configuration, the lifting mechanism may be fixedly mounted on the gripping device and configured to climb a set of rails, cables, or equivalent.

In the example of Fig. 6, each lifting band 606 has a respective spool 608, and the spools are arranged in pairs wherein each pair of spools is mounted on a respective single axle, so that there are four lifting bands 606, four spools 608, and two axles. The actuating mechanism is not shown, but a single or multiple actuating mechanisms may be provided, for example, both axles may be coupled to a single actuating mechanism, or an actuating mechanism may be provided per axle (along with a synchronising mechanism to synchronise the actions of the multiple axles). Each lifting band 606 is at one end (a proximal or vertically upper end) attached to the robot body 502, for example via a spool 608. Each lifting band 606 is at another end (a distal or vertically lower end) attached to the gripping device 602.

A plurality of gripping arms 612 extend from the gripping platform away from the internal cavity. As illustrated in Fig. 6, the gripping arms extend downward from the gripping platform 610.

The plurality of gripping arms may comprise a pair of gripping arms located on each of two opposing sides of the gripping platform, wherein each pair of gripping arms is configured to lift the plurality of stacked storage bins between them. Each pair of gripping arms may be movable towards each other from an open position to a closed position. In the open position, the gripping arms are vertically slidable relative to the plurality of bins. In the closed position pegs of the gripping arms abut complementary surfaces at the edges of slots in the plurality of bins, and the gripping arms are vertically coupled to the plurality of bins.

Each gripping arm 612 is coupled at a proximal end to the gripping platform 610. In the example of Fig. 6 the gripping device has four gripping arms 612 arranged in two pairs. Alternatives include a single gripping arm, two gripping arms, three gripping arms, six gripping arms arranged in three pairs, and eight gripping arms arranged in four pairs. At the proximal end each gripping arm 612 is coupled to the gripping platform 610 in a manner allowing movement of the gripping arm 612 between an open position and a closed position. In the open position the arrangement of gripping arm 612, guide 614, and stack of bins 508 is such that the gripping arm 612 (and by inference the gripping device) is vertically movable relative to the guide 614 and the stack of bins 508. In the closed position the gripping arm 612 is not vertically movable relative to the guide 614 and the stack of bins 508. In other words, in the closed position the gripping arm 612 is vertically coupled to the guide 614 and the stack of bins 508 so that vertical translation of the gripping device causes vertical translation of the stack of bins 508. The gripping arms 612 may be referred to as gripping members or bin engaging members, and are formed of rods, plates, or some other rigid length arranged to be movably fixed to the gripping platform 610 at a proximal end and to thread through slots or other receiving members in the guide 614 and the stack of bins 508. The gripping arms 612 are engineered to translate a pulling or lifting force from the lifting device via the gripping platform 610 to the stack of bins 508. Being movably fixed to the gripping platform 610 means that the gripping arms 612 are locked in a fixed position relative to the gripping platform 610 except when being moved between an open position and a closed position.

In the example of Fig. 6, movement between the open position and closed position is caused by an actuator such as a motor attached to the gripping platform, which translates each pair of gripping arms towards one another in the horizontal plane. Each gripping arm may comprise a plurality of pegs spaced along the length of the arm, each peg positioned to engage with a storage bin. In the closed position, pegs provided on the extending section of each of the gripping arms engage complementary surfaces (an underside of a flange surrounding the slot) of the stack of bins so that the gripping arms and the stack of bins are vertically coupled to one another. Vertical coupling in this context is taken to mean that vertical movement of the gripping arms 612 is translated to the stack of bins 508. Each gripping arm may comprise eight pegs and be configured to lift four bins. The pegs are spaced along the gripping arm so that two pegs contact each bin in the stack, at spaced apart complementary surfaces on the bin. Each gripping arm may have one or more from among: a peg positioned to engage the underside of the edge of an upper slot of a first bin; a peg positioned to engage the underside of the edge of a lower slot of first bin; a peg positioned to engage the underside of the edge of an upper slot of a second bin stacked vertically above or below the first bin; and a peg positioned engage the underside of the edge of a lower slot of the second bin. The gripping arms are illustrated in Figs. 9A-9B and discussed in more detail below.

The gripping device 602 further comprises a guide 614, which in the example of Fig. 6 includes a guide platform. The guide 614 is disposed vertically beneath the gripping platform 610. A guide actuating mechanism is configured to cause vertical translation of the guide 614 relative to the gripping platform 610 by winding and unwinding wires 616 from spools 618. Cables are an alternative to wires. The wires may transfer data as well as physically suspending the guide 614 beneath the gripping platform 610. The guide actuating mechanism may comprise one or more motors. The spools 618 may be encoded so that a controller is aware of vertical displacement of the guide 614 relative to the gripping platform 610.

The guide 614 comprises a slot or aperture 622 to receive each gripping arm 612. The slot is dimensioned and arranged relative to a guide platform to allow movement of the gripping arm 612 relative to the guide 614 in the vertical direction (noting the pegs need to be free to pass through) but to restrict movement of the received gripping arm 612 in the horizontal plane, wherein restrict may be taken to mean allowing translation between the open and closed positions, and precluding any movement beyond extremes defined by the open and closed positions. The slots 622 may be defined by apertures in the guide platform 614 itself, or may be defined by a plate or another member fixed to an edge of the guide platform 614 to define a slot or aperture 622. The slots or apertures 622 are vertically-disposed, so that vertical translation of the gripping arms 612 through the slots or apertures 622 is allowed, but translation in the horizontal plane is restricted. By the receiving of the gripping arms 612 through the slots 622, the guide 614 and the gripping plate 610 are fixed in position relative to one another in the horizontal plane. That is, the gripping arms 612 and slots 622 are arranged to define a spatial relationship between the guide 614 and the gripping plate 610 as aligned or coincident in the horizontal plane, but to allow relative movement of the two entities in the vertical direction.

In addition, the guide 614 is arranged with a bin engaging mechanism such as a pin or plurality of pins 620. The guide 614 of Fig. 6 shows four pins as an example of a bin engaging mechanism. The guide may have four pins, each pin positioned in a corner of the guide and configured to align the guide with corresponding points on a storage bin. The pins 620 are positioned and dimensioned to be removably received by complementary apertures in a flange of an uppermost bin of the plurality of bins 508 (the top bin being of the same design as the remaining bins). Alternatives include magnets which could engage with complementary magnets on the flange of the uppermost bin of the plurality of bins 508. In the arrangement illustrated in Fig. 6 there is a pin at each corner of the guide plate 614 extending downward (i.e. toward the bins and away from the robot body 502). When the bin engaging mechanism engages with the plurality of bins (which may be by engaging with the uppermost bin of the plurality of bins), the guide is fixed in position relative to the stack of bins in the horizontal plane. That is, the bin engaging mechanism and the complementary slots, apertures, rings, or receiving members, on the bins are arranged to define a spatial relationship between the guide 614 and the bins as aligned or coincident in the horizontal plane (i.e. one on top of the other), but to allow relative movement of the two entities in the vertical direction. When engaged, a planar element such as a platform of the guide may rest on a top flange of the uppermost bin.

The guide 614 therefore, by receiving the gripping arms 612 of the gripping device at the slots 622, and by being received by the stack of bins 508 at the pins 620, fixes in position relative to one another in the horizontal plane the gripping mechanism and the stack of bins. As discussed further below, the downward translation of the gripping device is therefore caused to be directly downward, and so the gripping arms 612 are in position to vertically couple with the stack of bins by movement from the open position to the closed position.

### Description of specific improvements: lifting operation in a series of five states

The robotic vehicles are configured to perform a method of lifting a plurality of stacked bins from an automated storage and retrieval system, the system comprising a plurality of vertical storage columns, a plurality of storage bins in a vertical stack in a storage column, and a horizontal rail system arranged above the vertical storage columns, the method comprising: moving a robotic vehicle on the grid to a location above a vertical storage column; lowering, using a lifting device, a gripping device from the robotic vehicle; inserting gripping arms of the gripping device into slots of a plurality of storage bins in a vertical stack; gripping the storage bins using the gripping arms, by moving the gripping arms towards each other from an open position to a closed position, wherein each gripping arm engages the plurality of storage bins; and lifting, using the lifting device, the gripping device to raise the engaged storage bins to an internal cavity in the robotic vehicle. The inserting the gripping arms of the gripping device into slots of the plurality of storage bins in the stack may comprise guiding the gripping arms into the slots in the uppermost bin in the stack using a guide. Methods may include moving the robotic vehicle to a port of the automated storage and retrieval system. Methods may include moving the robotic vehicle carrying a plurality of gripped storage bins to a location above a vertical storage column, lowering, using the lifting device, the gripping device and the engaged storage bins from the robotic vehicle, once the lowermost gripped storage bin rests on a surface in the vertical storage column, moving the gripping arms away from one another from a closed position to an open position; and lifting, using the lifting device, the gripping device to the internal cavity of the robotic vehicle. Such methods are illustrated in Figs. 7A to 7E.

Figs. 7A to 7E schematically illustrate a series of five states from a resting state to a state in which a stack of bins 706 has been lifted into an internal cavity 704 of the robot 700. Figs. 7A to 7E illustrate functionality of the robot of Figs. 5A to 5C and the lifting device of Fig. 6.

The robot 700 includes a body 702 defining an internal cavity 704. The robot 700 is supported above stacked bins 706 by a system of rails, not illustrated. The robot 700 comprises a lifting device. The lifting device comprises an actuating mechanism 708. The actuating mechanism may comprise a set of spools and a motor configured to supply torque to the spools to raise or lower the gripping device by tensioning a set of lifting bands, wherein each first lifting band is connected, at a first end, to a corresponding first spool and, at a second end opposite the first end, to the gripping device. The motor is rotationally coupled to the spools, around which spools are wound one or more lifting bands 710. The actuating mechanism 708 is fixed relative to the robot body 702. At an end distal from the spools, the lifting bands 710 are fixedly connected to a gripping platform 712. The gripping platform 712 comprises at least one pair of downwardly projecting gripping arms 714. The gripping arms 714 are integrally formed with, or fixedly attached to, the gripping platform 712. A guide platform 716 is situated below the gripping platform 712. The guide platform 716 and the gripping platform 712 are configured to move relative to one another vertically. Figure 6 illustrates a mechanism 618 as part of the gripping platform, configured to change the relative vertical positioning of the gripping platform 610 and guide platform 614. It is noted that, alternatively, such a mechanism could be part of the guide platform 614, or in a further alternative could be fixedly attached to neither the gripping platform nor the guide platform, but be attached to the body of the robot. The guide platform 716 is slidingly coupled to the gripping arms 714. For example, the guide platform 716 comprises a plurality of slots, each configured to allow a gripping arm 714 to pass through (vertically) so that the guide platform 716 can move vertically relative to the gripping platform 712 whilst maintaining the sliding coupling to the gripping arms 714. The plurality of slots are also configured to allow lateral movement of the gripping arm within the slot whilst maintaining the sliding coupling, as will be discussed further below in relation to Fig. 7D.

At Fig. 7A, the robot 700 is in a state configured for movement on the rail system to co-locate (in an x-y plane) with a target bin. The gripping platform 712 and the guide platform 716 are supported in positions toward the top of the internal cavity 704. Optionally, the guide platform 716 could be at a lower position within the cavity in this state. However, owing to the downward projecting gripping arms 714 which could interfere with the rails if the gripping platform 712 is lowered beneath a certain vertical position, the gripping platform 712 must be supported at or toward the top of the internal cavity 704 (i.e. sufficiently high to avoid the downwardly projecting gripping arms 714 from contacting the rail system).

Upon co-locating with a target bin, the robot 700 is configured to transition from the first state illustrated in Fig. 7A to the second state illustrated in Fig. 7B. In Fig. 7B, the guide platform 716 has been lowered relative to the gripping platform 712. As illustrated in Figure 6, the guide platform has pins (which may be referred to as positioning pins) positioned in each corner (though alternatively the guide platform may have one, two, three, four, or any number of pins, and similarly the storage bin may have the same number of corresponding points configured to receive the pin or pins) to removably engage correspondingly positioned apertures on a top flange surface of the stack of bins 706. Therefore, though not visible in Fig. 7B, it is assumed that the guide platform 716 is aligned with the stack of bins 706 via the positioning pins.

In addition to being aligned with the stack of bins 706, the guide platform 716 is still slidingly engaged with the gripping arms 714 of the gripping platform 712. Therefore, the guide platform 716 functions as an intermediate element to establish alignment between the gripping arms 714 and the stack of bins 706. Alignment in this context is taken to mean a relative positioning in the x-y (i.e. horizontal) plane at which the gripping arms 714 are coincident with corresponding slots in each bin of the stack of bins 706. An exemplary arrangement is illustrated in Figs. 9A-9B.

Fig. 7C illustrates the robot 700 in a third state. Transition from the second state of Fig. 7B to the third state of Fig. 7C is realised by actuation of the actuating mechanism 708. The actuating mechanism 708, by the action of a motor rotating one or more spools, decreases the length of lifting bands 710 wound round the spools and increases the unwound length, thereby allowing the gripping platform 712 and gripping arms 714 to be translated downward (under the force of gravity, against which tension in the lifting bands 710 acts to control the translation).

By virtue of the guide platform 716 being aligned with the stack of bins 706 and being slidingly engaged on the gripping arms 714, the gripping arms 714 are coincident in the x-y (horizontal) plane with corresponding slots in each of the stack of bins 706. The downward translation of the gripping platform 712 and gripping arms 714 therefore causes the gripping arms to be releasably engaged in a plurality of stacked bins 706. In the example of Figs. 7A to 7E, the internal cavity 704 is configured to house four bins, and therefore the gripping arms 714 are configured, with the gripping platform 712 translated downward to an extended position, to be releasably engaged in a top four bins of a stack. The robot 700 is configured to allow downward translation of the guide platform 716 and the gripping platform 712 below the positions illustrated in Fig. 7C, for example, to engage the top bins in a stack that is further below the rail system than the example of Fig. 7C.

Fig. 7D illustrates the robot 700 in a fourth state. Transition from the third state of Fig. 7C to the fourth state of Fig. 7D is realised by moving the gripping arms 714 from an open position to a closed position. In the closed position, the gripping arms are vertically coupled to the stack of bins 706 with which they are releasably engaged, so that vertical translation of the gripping arms causes equivalent vertical translation of the stack of bins 706. For example, the vertical coupling may be achieved via pegs integrally formed with, or fixedly attached to, the gripping arms 714, each peg positioned to engage with a storage bin. In particular, each peg may be arranged to engage a surface of a bin to which the gripping arms 714 are engaged to transmit a lifting force to the bin from the actuating mechanism 708 via the lifting bands 710 and lifting platform 712.

In Fig. 7D, the open (i.e. previous) position of the gripping arms is illustrated by dashed lines, to allow the transition to be identifiable. The movement from inside to outside positions is only an example of the open and closed positions. The movement from the open to the closed positions of the gripping arms 714 may be caused by a motor attached to the gripping platform 712. An example of the arrangement of storage bins and the movement of gripping arms from the open to the closed position is illustrated in Figs. 9A-9B.

Fig. 7E illustrates the robot 700 in a fifth state. Transition from the fourth state of Fig. 7D to the fifth state of Fig. 7E is realised by actuation of the actuating mechanism 708. In realising the transition from the fourth state to the fifth state, the actuating mechanism 708 reverses the action causing the transition from the second state to the third state. The actuating mechanism 708, by the action of a motor rotating one or more spools, increases the length of lifting bands 710 wound round the spools and decreases the unwound length, thereby tensioning the lifting bands 710 and causing the gripping platform 712 and gripping arms 714 to be translated upward (against the force of gravity). By virtue of the coupling of the gripping arms 714 to the top four bins of the stack of bins 706, the top four bins are translated upward and into the internal cavity 704 of the robot 700.

The target bin may have been one of the top four bins, in which case access to the bin may be achieved via the robot 700. Alternatively, the target bin may have been one of the bins 718 beneath the top four bins, in which case the target bin is now accessible by another (empty) robot, following appropriate movement of robots on the rail system to provide access.

Fig. 8A illustrates an intermediate state between the second state, as illustrated in Fig. 7B, and the third state, as illustrated in Fig. 7C. In Fig. 8A, the robot body 802 and internal cavity 804 are in position directly above the stack of bins 818. The guide 814 is resting on top of the top bin of the stack of bins 818, and the pins 816 of the bin engagement mechanism are received by complementary slots, rings, or apertures at a peripheral edge of a top surface of the top bin, so that a positional relationship between the guide 814 and the stack of bins 818 in the horizontal planes is fixed. By the fixing of the said positional relationship, slots in a peripheral surface of the guide 814 that receive the gripping arms 810 are aligned (in the horizontal plane) with slots in the stack of bins 818. Therefore, downward translation of the gripping arms 810 causes the gripping arms to engage with corresponding slots in the stack of bins. Wires or cables 812 suspend the guide 814 beneath the gripping platform 808, and may also send signals to a controller such as a trigger to being lowering of the gripping platform 808 when the guide 814 is in place on the stack of bins 818. The lifting bands 806 suspend the gripping platform 808 beneath the robot 800.

Fig. 8B illustrates the robot 800 in the third state, wherein the gripping device including the gripping platform 808 and gripping arms 810 has completed its downward translation away from the robot 800 and toward the stack of bins 818. The gripping platform 808 rests on the guiding platform 814, and each of the gripping arms 810 is engaged with corresponding slots in each of the top four bins. The gripping arms 810 are in the open position, pending translation to the closed position in which they vertically couple the gripping arms 810 to the stack of bins 818. Figs. 9A-9B show translation of the gripping arms from the open position to the closed position.

### Description of specific improvements: gripping arms open and closed positions

Figs. 9A and 9B illustrate a pair of gripping arms 906 releasably engaged in corresponding slots, tubes, rings, or apertures 910 defined on an outer surface of each of the stack of bins 912. Fig. 9A illustrates the robot 900 in the third state, as illustrated in Fig. 7C. The gripping arms 906 are each releasably engaged (i.e. received) by a slot, tube, ring, or aperture 902 in the guide, and by corresponding slots, tubes, rings, or apertures 910 in each bin. The slots, tubes, rings, or apertures to receive each individual gripping arms 906 define a series that are coincident in the horizontal plane so that vertical translation of the gripping arms causes engagement which each of the series. That is, each gripping arm 906 passes through a corresponding slot, tube, ring, or aperture in the guide and each of the stack of bins 912.

In the open position illustrated in Fig. 9A, a separation, displacement, or distance between the pair of gripping arms in the dimension illustrated in Fig. 9A is D1. At the open position, the gripping arms 906 and bins 912 may be dimensioned and arranged so that the gripping arms 912 abut outer peripheral edges of the slots, tubes, rings, or apertures 910.

Fig. 9B illustrates the robot 900 in the fourth state as illustrated in Fig. 7D. The gripping arms 906 have been translated by an actuating mechanism from the open position to the closed position. A separation, displacement, or distance between the pair of gripping arms in the dimension illustrated in Fig. 9A is D2, wherein D2 is less than D1. By moving toward one another, a surface of the pegs 908 is coincident in the horizontal plane with a corresponding surface of each bin (at an edge of the slot, tube, ring, or aperture 910), so that upward motion of the gripping arms 906 will cause upward motion of the stack of bins 912, and so lifting is achieved. Pegs 908 are portions of the gripping arms 906, or separate elements fixedly attached to the gripping arms, that extend horizontally outward from the gripping arms to be positionable underneath a corresponding surface of the bins in a lifting position. The fourth state is an example of a lifting position. In an alternative arrangement, the pegs may themselves be translatable relative to the gripping arm 906 to cause at least a portion of the peg to be underneath a corresponding surface of the bin in a lifting position.

### Description of specific improvements: different views of a robotic vehicle including gapped stacking

Fig. 10A is a first side view of a robot 1000 in an intermediate state between the first state, as illustrated in Fig. 7A, and the second state, as illustrated in Fig. 7B. In Fig. 10A, the robot body 1002 and internal cavity 1004 are in position directly above a stack of bins (not illustrated). The guide 1016 is being translated vertically downward to engage a top bin of the stack of bins via pins 1014 and therefore to establish a fixed positional relationship between the guide 1016 and the stack of bins, and therefore also between the gripping device 1008 and the stack of bins. The cables 1010 suspend the guide 1016 beneath the gripping device 1008, and by unwinding increase the vertical displacement between the gripping device 1008 and the guide 1016. Gripping arms 1012 extend downward from the gripping platform and establish a fixed positional relationship in the horizontal plane between the guide 1016 and the gripping platform, whilst allowing a vertical displacement of the two components to change. A lifting device 1006 is positioned above the internal cavity 1004 and controls vertical movement of the gripping device 1008 relative to the internal cavity by winding and unwinding lifting bands (not illustrated).

Fig. 10B is a vertical cross-sectional view of the robot 1000 in the intermediate state of Fig. 10A.

Fig. 10C is a front view of the robot 1000 in the intermediate state of Fig. 10A. Fig. 10C illustrates an access hatch by which an operative may access bins within the internal cavity 10004.

Fig. 10D is a top view of the robot 1000 in the intermediate state of Fig. 10A.

Fig. 10E is a bottom perspective view of the robot 1000 in the intermediate state of Fig. 10A.

Fig. 10F is a top perspective view of the robot 1000 in the intermediate state of Fig. 10A.

Fig. 11 illustrates the robot in the fifth state as illustrated in Fig. 7E. Fig. 11 illustrates a distance h between adjacent pegs 1104 on a gripper arm 1106. In the example of Fig. 11, the gripper arms 1106 are configured so that the distance h between adjacent pegs engaging equivalent slots on adjacent bins in the stack is the height of a single bin plus a gap height 1102. The gap height may be, for example, 5mm, 10mm, less than 10mm, or less than 20mm. The inclusion of the gap height prevents the lower bin bearing the weight of the upper bins. The gripper arms 1106 are configured to lift each bin in the stack of bins independently with no transmission of weight between adjacent bins in the stack.

In the example of Fig. 11, each gripper arm comprises a first peg per storage bin in the stack to be lifted, the pegs being positioned to engage slots at an upper flange of the respective storage bins. A distance between adjacent first pegs may be h, being bin height plus a gap height such as 5mm. Optionally, each gripper arm may comprise a further peg per storage bin in the stack to be lifted, the further pegs being positioned to engage slots at a lower flange of the respective storage bins. A distance between adjacent further pegs may be h, being bin height plus a gap height such as 5mm.

### Description of specific improvements: stackable bins

Fig. 12 illustrates a single, empty, stackable bin 1200. A system may comprise a robotic vehicle as illustrated in Figs. 5A to 11, and a plurality of storage bins such as the storage bin illustrated in Fig. 12. The bin is an example of the bins that form the stacks of bins to be lifted by the robotic vehicle of the earlier illustrations. Apertures (which may be referred to as slots) 1202 are formed in a flange (vertically-facing surface) of the bin 1200. The gripper arms slidingly engage with the apertures 1202. For example, a gripping device may comprise a gripping plate and a pair of gripping arms attached to each of two opposing sides of the gripping plate, and the plurality of storage bins each comprise two apertures 1202 on two opposing sides, each aperture positioned to receive a respective gripping arm when aligned with the gripping device. Each storage bin 1200 may comprise two sets of aligned apertures 1202 on two opposing sides, each set of aligned apertures 1202 comprising an upper aperture and a lower aperture, wherein each set of aligned apertures is positioned to receive a respective gripping arm when aligned with the gripping device.

In the particular example of Fig. 12, the apertures 1202 are tubular, which enables precise alignment between bin 1200 and gripper arm to be maintained through a lifting procedure. Furthermore, the bin 1200 is configured so that each gripper arm is engaged by two distinct apertures 1202 in vertical alignment with one another (i.e. coincident in the x-y plane). The gripping arms may comprise a plurality of pegs spaced apart along the length of the gripping arm and configured to, when the gripper arms are in a closed position, engage the underside of edge of an aperture of a storage bin and lift the storage bin when the gripping device is lifted.

A surface 1204 of the flange beneath and to the inside of each aperture buts against a corresponding peg of the gripper arm when the gripper arm is in the closed position. In the open position the gripper arm translates freely in a vertical direction through the apertures 1202. The surface 1204 forms part of a flange on an external side of the bin. By being part of a flange the surface 1204 is reinforced and sufficiently strong to be lifted by the corresponding peg during a lifting procedure.

### Penultimate comments

Add in any commentary on alternative use cases, variants, instructions on construction or materials that the skilled person would need, and clauses for independent claim candidates not already in the claims.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following numbered statements describe a robotic vehicle, systems, methods, and programs.

Statement 1. A robotic vehicle for lifting storage bins from a storage system, the robotic vehicle comprising:
a vehicle body comprising an internal cavity for receiving a plurality of storage bins;
a gripping device configured to releasably engage a plurality of stacked storage bins; and
a lifting device configured to raise and lower the gripping device.

Statement 2. The robotic vehicle of Statement 1, wherein the gripping device comprises a gripping platform and plurality of gripping arms attached to the gripping platform.

Statement 3. The robotic vehicle of any of the preceding Statements, wherein the plurality of gripping arms comprises a pair of gripping arms located on each of two opposing sides of the gripping platform, wherein each pair of gripping arms is configured to lift the plurality of stacked storage bins between them.

Statement 4. The robotic vehicle of any of the preceding Statements, wherein the arms in each pair of gripping arms are movable towards each other from an open position to a closed position.

Statement 5. The robotic vehicle of any of the preceding Statements, wherein the gripping arms extend from the gripping platform away from the internal cavity.

Statement 6. The robotic vehicle of any of the preceding Statements, wherein the gripping device comprises an actuator attached to the gripping platform to move the gripping arms from an open position to a closed position.

Statement 7. The robotic vehicle of any of the preceding Statements, wherein each gripping arm comprises a plurality of pegs spaced along the length of the arm, each peg positioned to engage with a storage bin.

Statement 8. The robotic vehicle of any of the preceding Statements, wherein each gripping arm comprises eight pegs and is configured to lift four bins.

Statement 9. The robotic vehicle of any of the preceding Statements, wherein the gripping device comprises a guide configured to align the gripping arms in a position to releasably engage the plurality of stacked storage bins.

Statement 10. The robotic vehicle of any of the preceding Statements, wherein the guide is suspended below the gripping platform and is attached to the gripping plate by retractable wires.

Statement 11. The robotic vehicle of any of the preceding Statements, wherein the guide comprises a planar horizontal body configured to rest on top of a storage bin.

Statement 12. The robotic vehicle of any of the preceding Statements, wherein the guide comprises a plurality of slots, wherein each slot is configured to receive a gripping arm.

Statement 13. The robotic vehicle of any of the preceding Statements, where in the guide has four pins, each pin positioned in a corner of the guide and configured to align the guide with corresponding points on a storage bin.

Statement 14. The robotic vehicle of any of the preceding Statements, wherein the lifting device comprises a set of spools and a motor configured to supply torque to the spools to raise or lower the gripping device by tensioning a set of lifting bands, wherein each first lifting band is connected, at a first end, to a corresponding first spool and, at a second end opposite the first end, to the gripping device.

Statement 15. The robotic vehicle of any of the preceding Statements further comprising a first and second set of wheels for moving the vehicle in a first and second direction respectively.

Statement 16. The robotic vehicle of any of the preceding Statements, wherein the internal cavity is configured to receive the plurality of storage bins via an aperture at a base of the internal cavity, and wherein the lifting device is configured to move the gripping device vertically downward relative to the internal cavity to releasably engage the plurality of stacked storage bins by moving the gripping arms from an open position to a closed position, and the lifting device is further configured to move the gripping device and the releasably engaged plurality of stacked storage bins vertically upward into the internal cavity via the aperture at the base of the internal cavity.

Statement 17. The robotic vehicle of any of the preceding Statements, further comprising a guide suspended beneath the gripping platform and vertically movable relative to the gripping platform, the guide comprising one or more alignment pins positioned to correspond to pin holes in a flange of a top storage bin among the plurality of storage bins, the guide further comprising a plurality of alignment slots, each being configured to receive one of the gripping arms, to permit vertical sliding of the guide along the gripping arm, and to confine horizontal plane movement of the gripping arms relative to the guide to a range defined by the open position and the closed position of the gripping arms.

Statement 18. A system comprising a plurality of storage bins and a robotic vehicle of any of the preceding Statements.

Statement 19. The system of Statement 18, wherein the gripping device comprises a gripping plate and a pair of gripping arms attached to each of two opposing sides of the gripping plate, and wherein the plurality of storage bins each comprise two slots on two opposing sides, each slot positioned to receive a respective gripping arm when aligned with the gripping device.

Statement 20. The system of Statement 18 or 19, wherein, the storage bins each comprise two sets of aligned slots on two opposing sides, each set of aligned slots comprising an upper slot and a lower slot, wherein each set of aligned slots is positioned to receive a respective gripping arm when aligned with the gripping device.

Statement 21. The system of any of Statements 18 to 20, wherein the gripping arms comprise a plurality of pegs spaced apart along the length of the gripping arm and configured to, when the gripper arms are in a closed position, engage the underside of an edge of a slot of a storage bin and lift the storage bin when the gripping device is lifted.

Statement 22. The system of any of Statements 18 to 21, wherein each gripping arm has: a peg positioned to engage the underside of the edge of an upper slot of a first bin; a peg positioned to engage the underside of the edge of a lower slot of first bin; a peg positioned to engage the underside of the edge of an upper slot of a second bin stacked vertically above or below the first bin; and a peg positioned engage the underside of the edge of a lower slot of the second bin.

Statement 23. The system of any of any of Statements 18 to 22, wherein the pegs are spaced such that, when the bins are lifted by the gripping device, there is a gap between stacked bins.

Statement 24. The system of any of Statements 18 to 23, wherein the gap is 5mm.

Statement 25. An automated storage and retrieval system comprising;
a plurality of vertical storage columns, each vertical storage column configured to accommodate a plurality of storage bins in a vertical stack;
a plurality of storage bins for stacking in the vertical columns;
a horizontal rail system arranged above the vertical storage columns, configured to support a vehicle to travel on the rail system; a robotic vehicle according to any of claims 1 to 15 configured to insert and remove storage bins from the vertical storage columns.

Statement 26. A method of lifting a plurality of stacked bins from an automated storage and retrieval system, the system comprising a plurality of vertical storage columns, a plurality of storage bins in a vertical stack in a storage column, and a horizontal rail system arranged above the vertical storage columns, the method comprising:
moving a robotic vehicle on the grid to a location above a vertical storage column;
lowering, using a lifting device, a gripping device from the robotic vehicle;
inserting gripping arms of the gripping device into slots of a plurality of storage bins in a vertical stack;
gripping the storage bins using the gripping arms, by moving the gripping arms towards each other from an open position to a closed position, wherein each gripping arm engages the plurality of storage bins;
lifting, using the lifting device, the gripping device to raise the engaged storage bins to an internal cavity in the robotic vehicle.

Statement 27. The method of Statement 26, further comprising moving the robotic vehicle to a port of the system.

Statement 28. The method of Statement 26 or 27, further comprising;
moving the robotic vehicle carrying a plurality of gripped storage bins to a location above a vertical storage column;
lowering, using the lifting device, the gripping device and the engaged storage bins from the robotic vehicle;
once the lowermost gripped storage bin rests on a surface in the vertical storage column, moving the gripping arms away from one another from a closed position to an open position; and
lifting, using the lifting device, the gripping device to the internal cavity of the robotic vehicle.

Statement 29. The method of any of Statements 26 to 28, wherein inserting gripping arms of the gripping device into slots of a plurality of storage bins in a vertical stack comprising guiding the gripping arms into the slots in the uppermost bin in the stack using a guide.

Statement 30. The method of any of Statements 26 to 29, further comprising:
prior to gripping the storage bins, measuring the distance travelled by the gripping arms relative to the guide; and
determining that a threshold distance has been travelled.

Statement 31. A computer-readable medium comprising instructions which, when executed by a processor of a device, cause the device to perform the method of any of Statements 26 to 30.

## Claims

1. A robotic vehicle for lifting storage bins from a storage system, the robotic vehicle comprising:
a vehicle body comprising an internal cavity for receiving a plurality of storage bins;
a gripping device configured to releasably engage a plurality of stacked storage bins; and
a lifting device configured to raise and lower the gripping device.

2. The robotic vehicle according to any preceding claim, wherein the gripping device comprises a gripping platform and plurality of gripping arms attached to the gripping platform.

3. The robotic vehicle according to claim 2, wherein the plurality of gripping arms comprises a pair of gripping arms located on each of two opposing sides of the gripping platform, wherein each pair of gripping arms is configured to lift the plurality of stacked storage bins between them.

4. The robotic vehicle according to claim 3, wherein the arms in each pair of gripping arms are movable towards each other from an open position to a closed position.

5. The robotic vehicle according to any of claims 2 to 4, wherein each gripping arm comprises a plurality of pegs spaced along the length of the arm, each peg positioned to engage with a storage bin.

6. The robotic vehicle according to any of claims 2 to 5, wherein the gripping device comprises a guide configured to align the gripping arms in a position to releasably engage the plurality of stacked storage bins.

7. The robotic vehicle according to claim 6, wherein the guide is suspended below the gripping platform and is attached to the gripping plate by retractable wires;
wherein the guide comprises a planar horizontal body configured to rest on top of a storage bin;
wherein the guide comprises a plurality of slots, wherein each slot is configured to receive a gripping arm; and
wherein the guide has four pins, each pin positioned in a corner of the guide and configured to align the guide with corresponding points on a storage bin.

8. The robotic vehicle according to any preceding claim, wherein the lifting device comprises a set of spools and a motor configured to supply torque to the spools to raise or lower the gripping device by tensioning a set of lifting bands, wherein each first lifting band is connected, at a first end, to a corresponding first spool and, at a second end opposite the first end, to the gripping device.

9. The robotic vehicle according to any preceding claim, wherein the internal cavity is configured to receive the plurality of storage bins via an aperture at a base of the internal cavity, and wherein the lifting device is configured to move the gripping device vertically downward relative to the internal cavity to releasably engage the plurality of stacked storage bins by moving the gripping arms from an open position to a closed position, and the lifting device is further configured to move the gripping device and the releasably engaged plurality of stacked storage bins vertically upward into the internal cavity via the aperture at the base of the internal cavity.

10. A system comprising a plurality of storage bins and a robotic vehicle of any preceding claim.

11. The system of claim 10, wherein the gripping device comprises a gripping plate and a pair of gripping arms attached to each of two opposing sides of the gripping plate, and wherein the plurality of storage bins each comprise two slots on two opposing sides, each slot positioned to receive a respective gripping arm when aligned with the gripping device; wherein
the gripping arms comprise a plurality of pegs spaced apart along the length of the gripping arm and configured to, when the gripper arms are in a closed position, engage the underside of an edge of a slot of a storage bin and lift the storage bin when the gripping device is lifted.

12. The system of claim 11, wherein the pegs are spaced such that, when the bins are lifted by the gripping device, there is a gap between stacked bins.

13. An automated storage and retrieval system comprising;
a plurality of vertical storage columns, each vertical storage column configured to accommodate a plurality of storage bins in a vertical stack;
a plurality of storage bins for stacking in the vertical columns;
a horizontal rail system arranged above the vertical storage columns, configured to support a vehicle to travel on the rail system;
a robotic vehicle according to any of claims 1 to 9 configured to insert and remove storage bins from the vertical storage columns.

14. A method of lifting a plurality of stacked bins from an automated storage and retrieval system, the system comprising a plurality of vertical storage columns, a plurality of storage bins in a vertical stack in a storage column, and a horizontal rail system arranged above the vertical storage columns, the method comprising:
moving a robotic vehicle on the grid to a location above a vertical storage column;
lowering, using a lifting device, a gripping device from the robotic vehicle;
inserting gripping arms of the gripping device into slots of a plurality of storage bins in a vertical stack;
gripping the storage bins using the gripping arms, by moving the gripping arms towards each other from an open position to a closed position, wherein each gripping arm engages the plurality of storage bins;
lifting, using the lifting device, the gripping device to raise the engaged storage bins to an internal cavity in the robotic vehicle.

15. A computer-readable medium comprising instructions which, when executed by a processor of a device, cause the device to perform the method of claim 14.
